# EUROPEAN PATENT APPLICATION

(11) **EP 2 133 775 A1**
(43) Date of publication of application: **16.12.2009**
(21) Application number: 08721611.5
(22) Date of filing: 07.03.2008
(51) Int. Cl.: G06F 3/041, G03B 21/26, G09G 5/00

(54) **PROJECTOR SYSTEM**

(30) Priority: 08.03.2007 JP 2007058728
(71) Applicant: Lunascape Co., Ltd., Minato-ku Tokyo 106-0043 (JP); Takram Design Engineering, Shinjuku-ku Tokyo 160-0022 (JP)
(72) Inventor: KONDO, Hidekazu, Tokyo 111-0041 (JP); TAGAWA, Kinya, Tokyo 160-0022 (JP)
(74) Representative: Kramer - Barske - Schmidtchen
(86) International application number: PCT/JP2008/054193
(87) International publication number: WO 2008/108467

(57) **Abstract**

In a projector system, a user specifies an arbitrary position on a projector screen (60) using laser light by means of a light pen (30). A PC (10) detects the continued specification of the same position for a prescribed amount of time on the basis of an acquired image of an optical receiver (40). After the prescribed amount of time elapses, the PC (10) generates an ON flag signal equivalent to the click button operation of a mouse.

## Description

### TECHNICAL FIELD

The present invention relates to a projector system that projects images, and more particularly to a projector system that projects an image identical to an image displayed on the display device of a computer onto the surface of an object (hereinafter referred to as a projector screen) by means of a projector.

### BACKGROUND ART

Conventional projector systems of this type can project information such as figures and documents created on a PC or similar computer onto a projector screen, and thus have been used for presentations in large locations such as lecture halls.

With such projector systems, when the lecturer points to a projected image, he or she must use a long rod to point to a specific location on the projector screen. For this reason, two people have been needed for presentations: one person to operate the PC for operations such as flipping the pages of the images to be projected, and one person to give the lecture.

In order to resolve such inconvenience, a projector system has been proposed wherein a portable infrared light-emitting device referred to as a laser pen is used to remotely shoot laser light onto the projector screen, and project the figure of a spot (a circular point) of a specific color. In so doing, an arbitrary location on the projector screen can be called to the audience's attention (see Patent Literature 1).

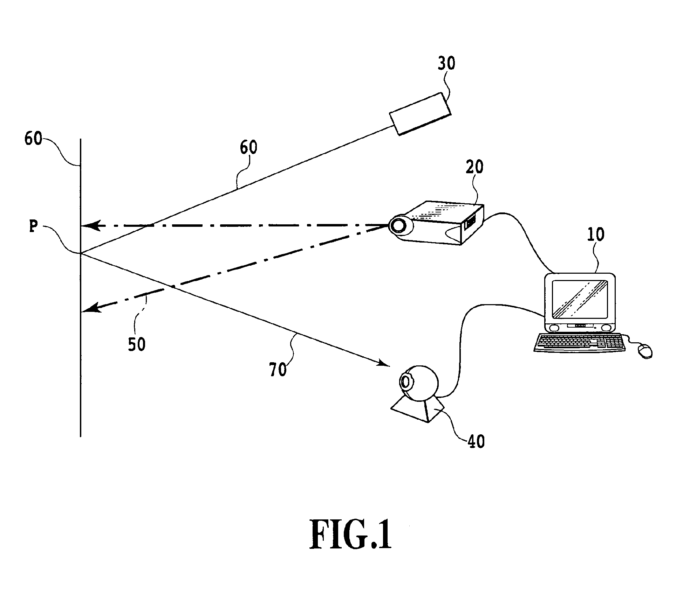

A system configuration of such a conventional example is shown in Fig. 1. In Fig. 1, 10 is a personal computer that produces images to be controlled (hereinafter abbreviated as PC). The PC 10 includes memory (RAM) that stores image data for one screen's worth images to be displayed on a display device. This image data is made up of luminance data and chrominance data (RGB data) for each of the pixels constituting a single screen.

Installed in the PC 10 are software programs for displaying images (such as word processing software and image creation software, hereinafter abbreviated as display software), together with projector software for controlling a projector 20 (hereinafter abbreviated as projector software). As a result of a CPU within the PC executing the projector software, projection images in the form of image data (typically referred to as an image signal) stored in memory are sent from the PC 10 to the projector 20.

20 is a projector which includes a liquid crystal display (LCD) as well as a light source. When light from the tricolor (RGB) light source radiates from behind the LCD, open pixels among the pixels in the LCD allow the light to pass through. Subsequently, the tricolor transmitted light passes through compound optics, and transmitted light 50 is projected onto a projector screen 60. Each pixel in the LCD (there being 3 RGB pixels for each pixel) is opened or closed by the above image data. In so doing, and by additionally adjusting the brightness of the tricolor light source on the basis of the image data, the images sent from the PC in the form of image data are projected onto the projector screen 60 as visible images.

30 is optical means that emits laser light 60. Since such means is typically referred to by the widespread name laser pen, such means will hereinafter be referred to as the laser pen 30 in the present specification. 40 is an optical receiver having one screen's worth of optical sensors, such as the optical receivers referred to as CCDs, can be used therefor. The optical receiver 40 includes a filter that only transmits reflected light 70 from the laser pen 30, and blocks the reflected light of the projected light from the projector 20. When the reflected light 70 is incident upon specific pixels on the light-sensitive surface of the CCD in the optical receiver 40, the CCD converts the light incident on the optical sensors of each pixel to electrical signals (i.e., a photoelectric conversion signals), and outputs the result.

The voltage of the photoelectric conversion signals output from each pixel expresses the luminance of the light incident upon that pixel. Since the photoelectric conversion signals of each of the pixels are analog signals, the analog signals are converted into a digital signal that expresses the voltages using numerical values, by means of an A/D converter within the optical receiver 40. The digital signal for 1 screen thus generated by the optical receiver 40 (hereinafter referred to as the acquired mage) is sent to the PC 10. The projector software in the PC 10 compares the luminance values indicated by the per-pixel image data in the received acquired image to a predetermined threshold value, and the pixel locations having luminance values larger than the threshold value are detected.

Near the pixel locations corresponding to the detected pixel locations in the memory where the projection image is stored, a specific graphic is combined with the stored projection image in memory by the projector software. The graphic may be an arrow graphic or similar cursor graphic image, for example.

By means of the combination process, the cursor graphic image is also projected onto the projector screen 60 by the projector 20.

If the above process is repeated, and the lecturer controls the laser pen 30 to move to a specific position P on the projector screen 60, then in response to that movement, the cursor graphic image displayed on the projector screen 60 also moves.

In addition, if the lecturer stops the radiation of laser light by switching off the laser pen, then the cursor graphic image also disappears from the projector screen 60.

By means of the above projector system, the lecturer becomes able to control the laser pen 30 while controlling the PC 10, and specify arbitrary locations projected onto the projector screen 60. However, the lecturer must control both the PC 10 and the laser pen 30. For this reason, there is strong demand from typical users to utilize the projector screen 60 like the display device of a PC and the laser pen 30 like a mouse, enabling user to draw and erase lines, for example.

When thinking of projector systems that meets the users' demands, the laser pen 30 of the related art does not have a function corresponding to the click button of a mouse. If a click button is provided on the laser pen 30, then the on/off electrical signal produced by the click button must be transmitted to the PC 10 in a wireless manner. For this reason, both a click button as well as a wireless communication apparatus that transmits an on/off signal produced by the click button become necessary in the laser pen 30, and a wireless communication apparatus for receiving the on/off signal becomes necessary in the PC 10. Consequently, a problem that must be resolved is produced, in that the projector system becomes very costly.

Patent Literature 1: Japanese Patent Laid-Open No. H11-85395 (1999)

### DISCLOSURE OF THE INVENTION

Consequently, an object of the present invention is to provide a projector system able to be provide a laser pen 30 with a (virtual) click button similar to that of a mouse, but without using hardware components such as a click button or wireless communication apparatus.

In order to achieve such an object, the present invention is characterized by a projector system that projects an image onto a projector screen, and in addition, receives with an optical receiver the reflected light of laser light radiated onto the projector screen by a laser pen, and detects the position on the projector screen specified by the laser light by converting the received position of the reflected light on the received screen detected by the optical receiver into the position on the projector light specified by the laser light.
The projector system includes:
storing means for repeatedly storing the detected specified position;
determining means for repeatedly determining, every time the specified position is detected and before the storing means stores the next detected specified position, whether or not the next detected specified position will match the last specified position stored in the storing means;
timing means for timing the amount of time a matching determination is consecutively obtained by the determining means;
controlling means for resetting the timing result of the timing means to the numerical value zero when a non-matching determination is obtained by the determining means;
comparing means for repeatedly comparing the magnitude of the timing result of the timing means to the magnitude of a predetermined threshold value; and
flag signal generating and holding means for generating and holding an ON flag signal when a comparison result is obtained by the comparing means indicating that the timing result of the timing means is greater than the threshold value, and for generating and holding an OFF flag signal when a non-matching determination is obtained by the determining means, or alternatively, when a comparison result is obtained by the comparing means indicating that the timing result of the timing means is less than the threshold value.

In addition, another mode of the present invention is characterized by a projector system that projects an image onto a projector screen, and in addition, receives with an optical receiver the reflected light of laser light radiated onto the projector screen by a laser pen, and detects the position on the projector screen specified by the laser light by converting the received position of the reflected light on the received screen detected by the optical receiver into the position on the projector light specified by the laser light.
The projector system includes:
switching-off detecting means for detecting the switching off of the laser pen from the reflecting state of laser light within a specific region on the projector screen, on the basis of the received position of the reflected light on the received screen detected by the optical receiver as well as luminance variation of the reflected light;
switching-on detecting means for detecting the switching-on of the laser pen from the reflecting state of laser light within a specific region on the projector screen, on the basis of the received position of the reflected light on the received screen detected by the optical receiver as well as luminance variation of the reflected light; and
signal generating means for generating an ON flag signal from the time that the switching-off of the laser pen is detected by the switching-off detecting means until the time that the switching-on of the laser pen is detected by the switching-on detecting means.

### BRIEF DESCRIPTION OF THE DRAWINGS

[Fig. 1] Fig. 1 is a block diagram illustrating a hardware configuration of exemplary related art.
[Fig. 2] Fig. 2 is a block diagram illustrating a schematic hardware configuration of a PC 10 in a first embodiment of the present invention.
[Fig. 3] Fig. 3 is a block diagram illustrating a software configuration of the first embodiment of the present invention.
[Fig. 4] Fig. 4 is a flowchart illustrating a processing sequence in the first embodiment of the present invention.
[Fig. 5] Fig. 5 is a flowchart illustrating a processing sequence for executing program commands.
[Fig. 6] Fig. 6 is a flowchart illustrating an improved processing sequence of the first embodiment.
[Fig. 7A] Fig. 7A is an explanatory diagram for explaining a position specifying operation using the laser pen 30.
[Fig. 7B] Fig. 7B is an explanatory diagram for explaining a position specifying operation using the laser pen 30.
[Fig. 8] Fig. 8 is a flowchart illustrating a processing sequence of the second embodiment.

### BEST MODE FOR CARRYING OUT THE INVENTION

Hereinafter, embodiments of the present invention will be described in detail and with reference to the drawings.

### (First Embodiment)

Since the hardware-related configuration of the projector system in the first embodiment of the present invention may be nearly identical to the technology of the related art in Fig. 1, the configuration is already described in the Background Art of the present specification, and thus detailed description is omitted herein.

In order to describe the present invention, the internal configuration of the PC 10 in Fig. 1 will be simply described. The present invention is not limited to the PC 10, and an information processing device that uses a CPU, or an electronic circuit or similar apparatus that combines logical arithmetic circuits may be used as the PC 10.

1000 is a CPU that executes a program installed onto a hard disk 1030 of the PC 10.

1010 is system memory, formed by ROM or RAM. Inside the system memory 1010, there are provided a memory area for loading programs to be executed by the CPU 1000, a memory area for storing images to be displayed on the display 1020, and a memory area that stores various information used when the CPU 1000 executes information processing.

1020 is a display that displays the same image as the projection image projected by the projector 20.

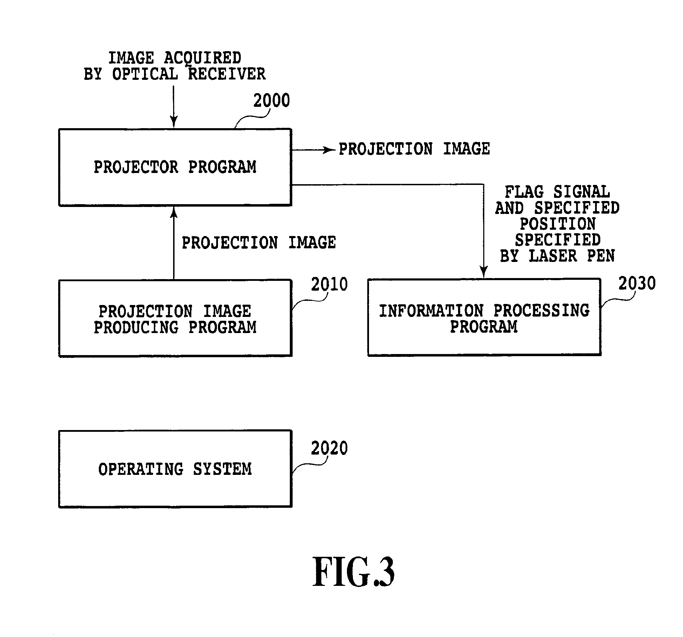

1030 is a hard disk for saving a program to be later described (Fig. 3). The program to be executed by the CPU 1000 is executed by the CPU 1000 after being loaded into the system memory 1010 from the hard disk 1030.

1040 is an input/output interface that receives acquired images from the optical receiver 10. In addition, projection images from the input/output interface 1040 are transmitted to the projector 20. It is also possible to connect conventionally well-known input/output devices such as a mouse and keyboard to the input/output interface 1040.

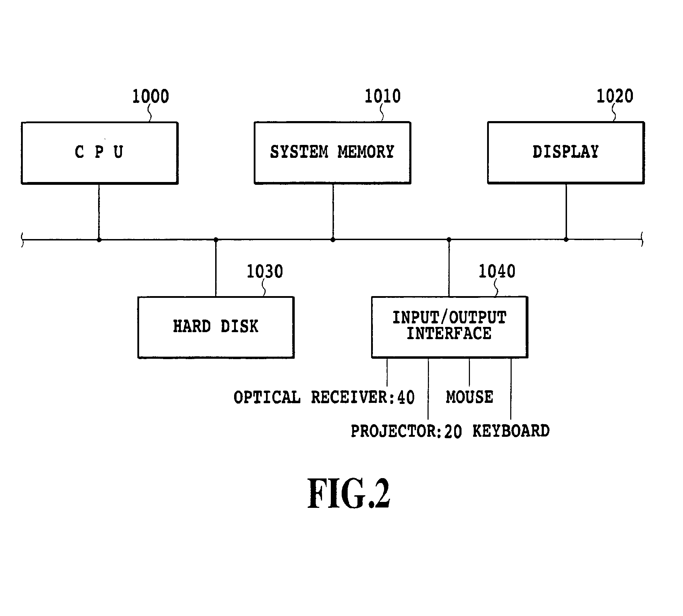

Fig. 3 illustrates the structure of software installed in the PC 10 in the first embodiment of the present invention. In Fig. 2, 2000 is a projector program, which is a program for transmitting to the projector 20 a projection image created by a projection image producing program (described later) 2010. The functions for the above are similar to those of the related art. In the first embodiment of the present invention, in addition to the functions of a projector program of the related art, the projector program detects operations of the laser pen 30 corresponding to the click button of a mouse (hereinafter referred to as click button operations), and generates an ON/OFF flag signal representing the click button operation. In addition, the projector program 2000 also detects specified positions on the projector screen specified by the laser light of the laser pen 30 similarly to the related art, and passes the flag signal together with the detected specified position to one of various information processing programs 2030.

In the present embodiment, the example of executing program commands (so-called programs) assigned to a specified position will be described. The information processing program 2030 may of course be incorporated into the projector program 2000.

2010 is a projection image producing program that is a peripheral program that creates images to be projected. For example, software such as word processing software, spreadsheet software, image creation software, and content creation software for presentations are well-known. Projection images created by such software are stored in internal memory used for displaying images on the display device of the PC 10, and thus projection images are passed to the projector program 2000 via this internal memory (i.e., the projector program 2000 reads them from the internal memory).

2030 is an information processing program that conducts information processing on the basis of both the position information input into the PC 10 as a result of operating the laser pen 30 (the reflected position of the laser light on the projector screen 60), as well as the ON/OFF flag signal generated by the projector program 2000 as a result of a click button operation.

In the present embodiment, an example will be described wherein, when a click button operation is conducted by the laser pen 30 within a predetermined region, a program command assigned to that region is executed.

2020 is, for example, Microsoft Windows (registered trademark) or a similar operating system 2020. The above programs run on the operating system.

It will now be described how a click button operation from the laser pen 30 is detected by the PC 10 in accordance with the present invention.

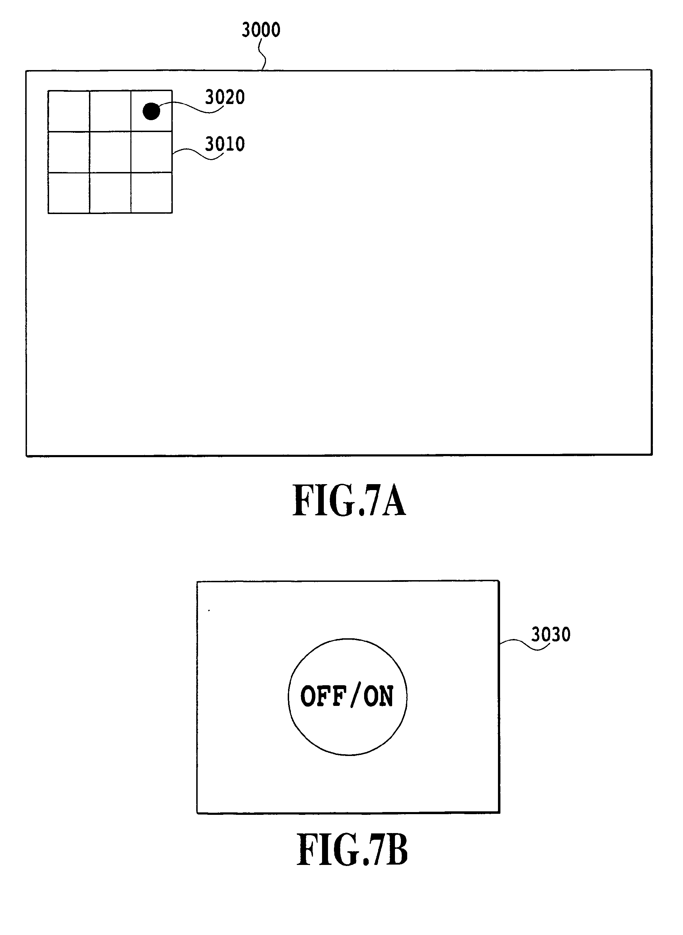

As shown in Fig. 7A, in the upper-left part of the projector screen 3000 (labeled 60 in Fig. 1), a region 3010 is assigned in advance as a region for executing a click button operation of the laser pen 30. The region 3010 is divided into nine small regions. A different program command is associated in advance with each small region 30. As one example, icons or other identifying images may be displayed with projection images in the nine small regions. When the lecturer specifies any one of the small regions with the laser pen 30, the small region and the associated program command can be identified by the icon display.

If the lecturer radiates the laser light of the laser pen 30 for a fixed time on one of the small regions (the black circle 3020 in Fig. 7), the irradiated position is communicated to the PC 10 via the acquired image of the optical receiver 40. In the PC 10, it is detected that position specification by the laser pen 30 was conducted for a fixed time within the region 3010, and an ON flag signal equivalent to the click button operation signal of a mouse is generated and held.

When it is desired to release the click button operation (set the flag signal to OFF), the lecturer moves the reflected position of the laser light outside the region 3010. If the PC 10 detects that the reflected position of the laser light has moved outside the region 3010 on the basis of the acquired image of the optical receiver, then the PC 10 generates and holds an OFF flag signal.

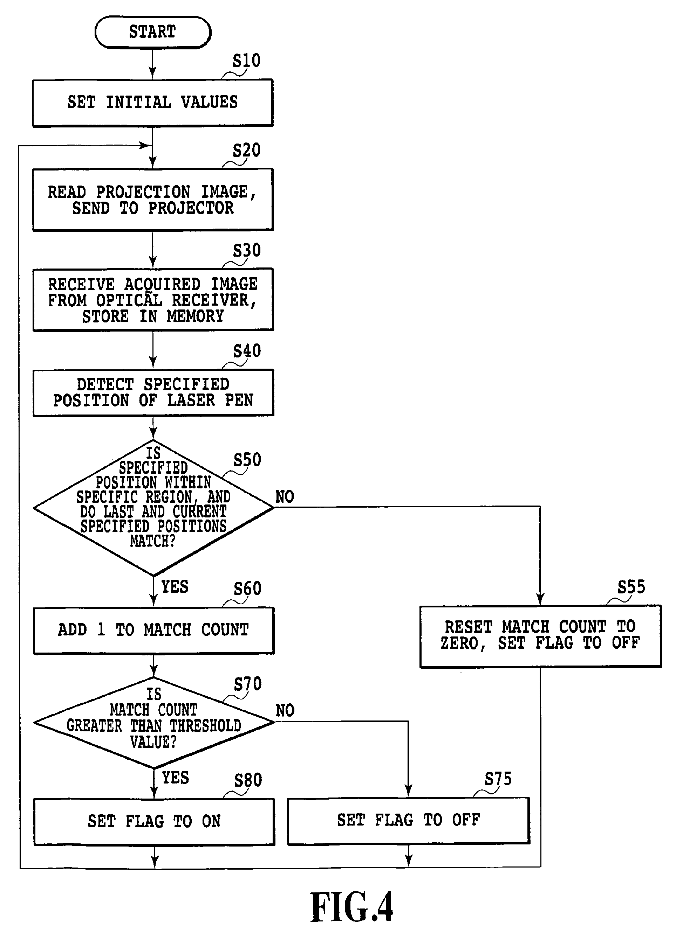

To that end, a processing sequence for execution by the CPU 1000 in the PC 10 is illustrated in Fig. 4. The processing sequence shown in Fig. 4 is in the form of a program executable by the CPU 1000, and is incorporated in advance into the projector program 2000 in Fig. 3.

When the processing sequence in Fig. 4 is initiated, the CPU 1000 first initializes variables to be used (S10). A variable (hereinafter, flag) for storing (holding) the flag signal is initialized to OFF.

Next, the CPU 1000 reads out a projection image stored within the system memory 1010, and transmits the image to the projector 20 via the input/output interface 1040 (S20). In so doing, a projection image is projected onto the projector screen 60.

The CPU 1000 receives an acquired image from the optical receiver 40 via the input/output interface 1040, and temporarily stores the image in the system memory 1010 (S30).

The CPU scans the acquired image stored in the system memory 1010. Similarly to the related art, the CPU 1000 detects closed pixel regions having luminance equal to or greater than a threshold value, and additionally having a number of pixels equal to or greater than a predetermined number. In so doing, the PC 10 detects the position of that closed zone as the reflection position of the laser light (by implication, the specified position) (S40). This detected position is stored in the system memory 1010 in the form of a variable.

The CPU 1000 compares the last detected specified position to the current detected specified position, and if the positions match, and furthermore if the current specified position is determined to be within a specific region (within the region 3010 in Fig. 7A) (a YES determination in S50), then the sequence proceeds to S560.

In S60, the CPU 1000 increments the match count by 1. This count indicates a timing value of the amount of time that the lecturer has been specifying the same position within the region 3010 on the projector screen.

On the other hand, in S50, if it is determined by comparison of the current detected specified position with the last detected specified position as well as comparison of the specified position with part of the region 3010 that the specified position is not within the region 3010, or that the positions are not the same (a NO determination in S50), then the match count is reset to zero, the flag is set to OFF, and the sequence returns to S20 (S55→S20). Since the value of this flag is stored in the system memory 1010, the flag signal is held as OFF.

When the processing for timing the specifying time at the same position by the laser pen 30 in S60 ends, the the CPU 1000 next determines whether or not the counted match count is greater than a predetermined threshold value (S70). When the match count is greater than the threshold value, it is determined that the specifying time at the same position within the region 3010 by the laser pen 30 is equal to or greater than a prescribed amount of time. In other words, a click button operation by the lecturer is determined, and the flag corresponding to the click button generation signal is set to ON (S80). Since the value of this flag is stored in the system memory 1010, the flag signal is held as ON. The sequence returns to S20.

When it is determined by the determination processing in S70 that the match count is less than the threshold value, the sequence proceeds to 575, and the flag is set to OFF. After that, the sequence returns to S20.

If the above processing sequence is executed by the CPU 1000, the steps S20~S50→S55→S20 in the sequence are repeatedly executed when the specified position on the projector screen specified by the laser pen 30 is outside the region 3010 in Fig. 7A, and thus the flag is still held at OFF (no click button operation). When the specified position on the projector screen specified by the laser pen 30 is moved within the region 3010 and for as long as the specification of the same position has not reached a prescribed amount of time, the steps 520~S50→S60→S70→575→S20 in the sequence are repeatedly executed. In so doing, the amount of time that the specified position remains at the same position is counted.

If it is detected by the determination processing in S70 that the specified position has remained at the same position within the region 3010 for at least the prescribed amount of time (the determination result is larger), then the CPU 1000 sets the flag from OFF to ON for the first time. Thereafter, the flag is continually held ON for as long as the specified position specified by the laser pen 30 remains at the same position.

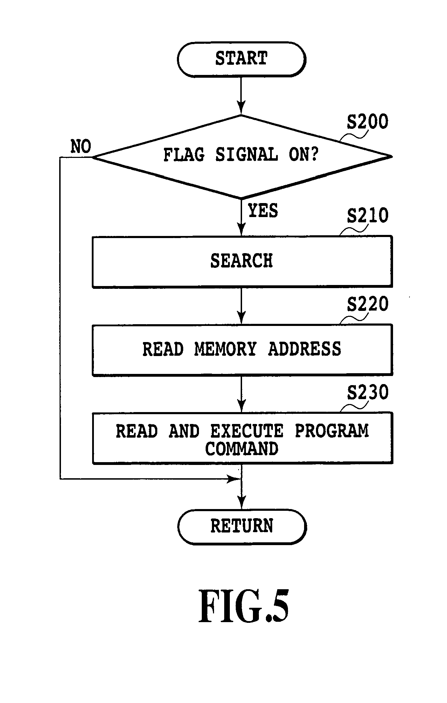

In this mode, in S80, the program command associated with the specified position (the program command in the information processing program 2030 in Fig. 3) is executed by the CPU 1000 as a result of the processing sequence in Fig. 5. This processing sequence will be later described, but as a result of this processing sequence, a program command execution function just like when an icon on the display screen is operated by a mouse click button operation is realized with the operation of the laser pen 30 to specify a position on the projector screen.

When it is desirable to set the flag to OFF, the lecturer may move the specified position of the laser pen 30 to a position different from the specified position he or she had been maintaining up to this point. As a result of this operation, the process proceeds to S20~S50→S55→S20, and the flag is set to OFF.

Next, a processing sequence for executing a program command assigned to a small region within the region 3010 in Fig. 7A when the lecturer specifies the same position within that small region for at least a prescribed amount of time will be described using Fig. 5. A table is stored in advance, and states both the position of the small region within the region 3010 in Fig. 7A, and the memory address on the hard disk 1030 of the program command (a program or function) to be executed. More specifically, in the present example a table is stored in advance on the hard disk 1030, and states nine sets of data pairing the positions of the nine small regions (for example, the upper-left coordinate position and the lower-right coordinate position) with memory addresses on the hard disk 1030.

In Fig. 5, the CPU 1000 confirms in the determination processing of S200 that the flag described above is ON. Next, since the specified position on the projector screen maintained at a specified position for a fixed amount of time is stored in the system memory, data in the table containing this position is searched for (S210). If by searching the CPU 1000 finds pair data in the table corresponding to the position specified by the laser pen 30 at the same position for a click button operation, then the CPU 1000 uses the memory address in the data obtained from the search results to read data from the hard disk 1030, load the data into the system memory 1010, and execute (S230).

### (First modification of the first embodiment)

(1) In the foregoing embodiment, the a condition for switching the flag ON was that the specified position specified by the laser pen 30 within the region 3010 in Fig. 7A remains at the same position for at least a prescribed amount of time. However, when it is desirable to remove this condition of a specified position within the region 3010 and switch the flag ON at any position on the projector screen 3000 in Fig. 7, it may be simply determined in S50 if the specified position specified by the laser pen 30 remains at the same position for a prescribed amount of time.

This modification has the advantage of being able to execute the click button operation of the laser pen 30 at any position. However, it also has a drawback in that the specified position of the laser pen 30 cannot be confined to the same position for the purpose of the lecture.

### (Second modification)

The foregoing embodiment is ideal for the case wherein a plurality of icon images are projected onto the projector screen, and an icon is specified with a click button operation by the laser pen 30 (remaining at the same position above the icon for a prescribed amount of time). An example ideal for switching modes will now be described. In this embodiment, specific regions are provided at the four corners of the projector screen. The lecturer first specifies the region at the upper-left corner using the laser pen 30, and then moves the specified position specified by the laser pen 30 to the region at the upper-right corner. The lecturer confines the specified position specified by the laser pen 30 to the same position within the region at the upper-right corner for a prescribed amount of time.

The mode can be switched by having the CPU 1000 detect such an operation from the acquired image of the optical receiver 40. One example of switching modes is activating and deactivating a drawing mode for drawing on the projector screen as specified by the laser pen 30. To deactivate the drawing mode, the region at the lower-left corner is first specified by the laser pen 30, and then the region at the lower-right corner is specified, and it is detected that a prescribed amount of time elapses while the same position is specified, for example. The embodiment in this case may likewise be realized by changing the determination parameter in S50, and can be easily carried out by persons skilled in the art with the description in this specification.

### (Third modification)

In the foregoing embodiment, a function identical to a mouse button operation is realized by using a laser pen 30 to specify the same position of a small region within the region 3010 in Fig. 7A for a fixed amount of time, and in addition, a program command associated with the small region is executed. For this purpose, a table is provided stating the memory address of the program command and the position of the small region. In the case where a program has a large number of program commands, identifiers may be applied to those programs. Thus, instead of a memory address, the program identifier may be stated in the table. In this case, the operating systemprovides the memory address of the program corresponding to the file identifier.

### (Fourth modification)

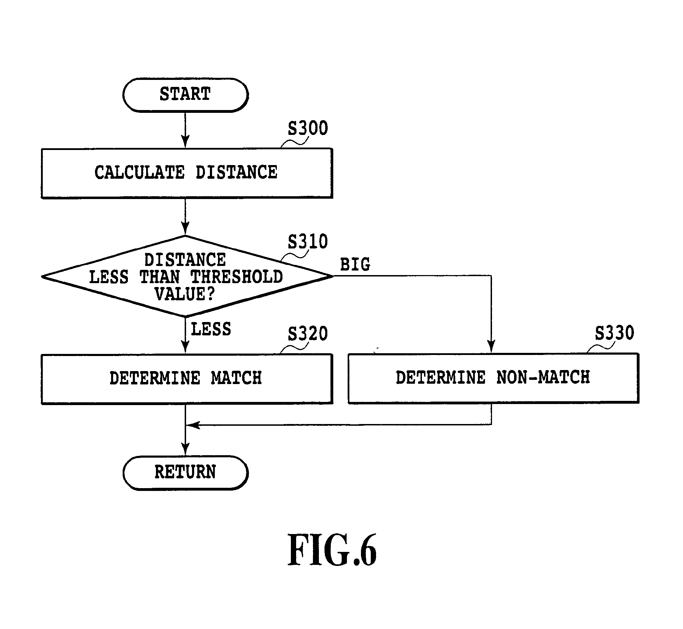

Since a person operates the laser pen 30, hand unsteadiness may occur, and in some cases it might be difficult for the radiated position of the laser light from the laser pen 30 (the specified position) to remain at the same position. For this reason, the specified position may be given some degree of tolerance error. A processing sequence for this purpose is illustrated in Fig. 6.

The processing sequence in Fig. 6 is executed in the determination processing S50 in Fig. 4. In Fig. 6, the CPU 1000 reads the last detected specified position specified by the laser pen 30 from the system memory 1010, and calculates the distance between the current detected specified position and the last specified position (S300). A comparison is made to determine if the distance obtained by calculation is within a predetermined tolerance value (S310). When the distance is within the tolerance range, the last and current specified positions match, or in other words, the specified position specified by the laser pen 30 is determined to the same position (S320). When the distance is not within the tolerance range, the last and current specified positions do not match, or in other words, it is determined that the specified positions specified by the laser pen 30 do not match (the specified position has moved) (S330). By executing this processing sequence, inconveniences in click button operation by the laser pen 30 do not occur, even when there is some degree of shifting in the specified position specified by the laser pen 30 due to hand unsteadiness.

### (Second embodiment)

The foregoing first embodiment is an example wherein the lecturer issues a click button operation to the PC 10 by specifying the same position on the projector screen 60 with the laser pen 30 for a fixed amount of time. Next, an example will be described wherein a click button on/off operation is issued to the PC 10 by switching the light of the laser pen 30 on/off.

In this example, the specific region 3030 in Fig. 7B is provided at an arbitrary position on the projector screen. After moving the radiated position of the laser light (the specified position) within the region 3030 with the laser pen 30 in the on state, the lecturer operates the power switch of the laser pen 30 to switch off the laser pen 30. Next, the lecturer operates the power switch to switch on the laser pen 30. As a result of this operation, the PC 10 determines that there was a click button on/of f operation. In addition, when the PC detects the switching off of the laser pen 30, the program command assigned to the region 3030 is executed.

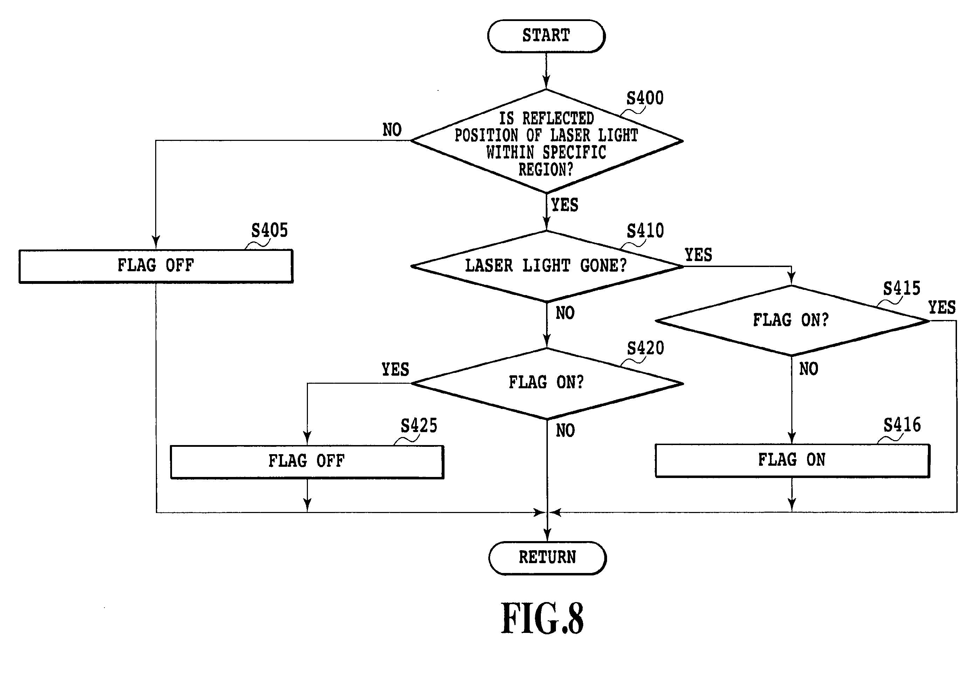

A processing sequence (program) of the CPU 1000 for this purpose is illustrated in Fig. 8. The processing sequence in Fig. 8 is repeatedly executed at fixed intervals. In Fig. 8, it is determined in S400 if the radiated position of the laser light (the reflected position on the projector screen) is within a specific region. More specifically, the reflected position of the laser light is detected on the basis of the acquired image of the optical receiver 40, and it is determined whether or not the detected position is within the specific region 3030 (S400). In the case of a NO determination, the CPU 1000 sets the flag to OFF, transitions to RETURN, and waits for the next execution of the processing sequence in Fig. 6 (S400→S415→RETURN). When the detected position is confirmed to be within the specific region, it is determined using the acquired image whether or not the laser pen 30 has been switched off (S400→S410).

If the laser pen 30 has been switched off, then the characteristics of the reflected laser light is not found in the acquired image of the optical receiver 40, or in other words, there are no closed pixel regions having luminance values equal to or greater than a predetermined value. Using the above as a condition, switching off (the disappearance of the laser light) can be detected (S410).

When a switching off is detected, the CPU 1000 determines whether or not the flag is ON (S415). In the case of a YES determination, the ON flag indicates that the switched-off state has continued for some time, and thus the CPU 1000 transitions the process to RETURN and waits for the next execution of the processing sequence in Fig. 6 (5415→RETURN). On the other hand, when a YES determination is obtained in the determination processing in S410, or in other words, when it is detected that the laser pen 30 is switched on, the CPU 1000 determines whether or not the flag is ON in the next processing step S420.

If the flag is OFF, then the ON operation of the click button indicates continued release, and thus the process transitions to RETURN (S420→RETURN). On the other hand, if the flag is ON, then it is the first detection of the switching-on of the laser pen 30, and thus the flag indicating the operation click button operational state is set to OFF, and the process goes to RETURN (S420→S430→RETURN).

If the CPU 1000 executes the above processing sequence, then when the laser pen 30 is in a switched-on state and its specified position is outside the specific region 30, the processing from S400→RETURN is repeatedly executed. If the lecturer moves the specified position within the specific region 30 with laser pen 30 still switched on, the flag is OFF in this state, and thus the steps of the sequence from S400→S410→S420→RETURN are repeated.

If the lecturer switches off the laser pen 30 (the flag is OFF at this time), then it is detected in S410 and S415 that the flag is OFF and that the laser pen 30 has been switched off. Subsequently, the flag is changed to ON (S416).

When the lecturer desires to release the click button operational state to OFF, he or she switches on the laser pen 30 within the specific region 330 (the flag is ON at this point). This operation is detected in steps S400→S410→S420→S425, and the flag is set to OFF.

### (Modification of second embodiment)

In this embodiment, there was a single region for detecting the switching on/off of the laser pen 30. However, the above processing sequence may be executed for each of the plurality of small regions within the region 3010 as shown in Fig. 7A. In this case, a program command assigned to each small region is executed. Similarly to the first embodiment, the processing sequence for executing a program command may involve preparing a table stating the positions of the small regions and the memory addresses of the program commands, and causing the CPU 1000 to read the memory address corresponding to the position of the small region specified by the switching-off of the laser pen 30, and then execute the program command.

## Claims

1. A projector system that projects an image onto a projector screen, and in addition, receives with an optical receiver the reflected light of laser light radiated onto the projector screen by a laser pen, and detects the position on the projector screen specified by the laser light by converting the received position of the reflected light on the received screen detected by the optical receiver into the position on the projector light specified by the laser light, the projector system comprising:
storing means for repeatedly storing the detected specified position;
determining means for repeatedly determining, every time the specified position is detected and before the storing means stores the next detected specified position, whether or not the next detected specified position will match the last specified position stored in the storing means;
timing means for timing the amount of time a matching determination is consecutively obtained by the determining means;
controlling means for resetting the timing result of the timing means to the numerical value zero when a non-matching determination is obtained by the determining means;
comparing means for repeatedly comparing the magnitude of the timing result of the timing means to the magnitude of a predetermined threshold value; and
flag signal generating and holding means for generating and holding an ON flag signal when a comparison result is obtained by the comparing means indicating that the timing result of the timing means is greater than the threshold value, and for generating and holding an OFF flag signal when a non-matching determination is obtained by the determining means, or alternatively, when a comparison result is obtained by the comparing means indicating that the timing result of the timing means is less than the threshold value.

2. The projector system according to Claim 1, further comprising:
calculating means for calculating the distance between the last specified position stored in the storing means and the current detected specified position; and
tolerance value comparing means for comparing the magnitude of the distance calculated by the calculating means to the magnitude of a predetermined tolerance value;
wherein
when it is determined from the comparison result that the distance is less than the tolerance value, the determining means determines a match as the determination result, and
when it is determined from the comparison result that the distance is greater than the tolerance value, the determining means determines a non-match as the determination result.

3. The projector system according to Claim 1, further comprising:
table storing means for storing a table stating the positions of predetermined regions on the projector screen, as well as either storage locations or identifiers for program commands associated with the positions;
program command storing means for storing the program commands;
searching means for searching the table for the specified position when the flag signal is indicating ON;
reading means for reading from the table either the storage location or the identifier of the program command at the same position as the specified position as the search result; and
information processing means for reading and executing a program command from the program command storing means on the basis of either the read storage location or the read identifier.

4. A projector system that projects an image onto a projector screen, and in addition, receives with an optical receiver the reflected light of laser light radiated onto the projector screen by a laser pen, and detects the position on the projector screen specified by the laser light by converting the received position of the reflected light on the received screen detected by the optical receiver into the position on the projector light specified by the laser light, the projector system comprising:
switching-off detecting means for detecting the switching off of the laser pen from the reflecting state of laser light within a specific region on the projector screen, on the basis of the received position of the reflected light on the received screen detected by the optical receiver as well as luminance variation of the reflected light;
switching-on detecting means for detecting the switching-on of the laser pen from the reflecting state of laser light within a specific region on the projector screen, on the basis of the received position of the reflected light on the received screen detected by the optical receiver as well as luminance variation of the reflected light; and
signal generating means for generating an ON flag signal from the time that the switching-off of the laser pen is detected by the switching-off detecting means until the time that the switching-on of the laser pen is detected by the switching-on detecting means.

5. The projector system according to Claim 4, further comprising:
table storing means for storing a table stating the positions of predetermined regions on the projector screen, as well as either storage locations or identifiers for program commands associated with the positions;
program command storing means for storing the program commands;
searching means for searching the table for the specified position when the flag signal is indicating ON;
reading means for reading from the table either the storage location or the identifier of the program command at the same position as the specified position as the search result; and
information processing means for reading and executing a program command from the program command storing means on the basis of either the read storage location or the read identifier.
